# EUROPEAN PATENT SPECIFICATION

(11) **EP 3 926 481 B1**
(45) Date of publication and mention of the grant of the patent: **09.07.2025**
(21) Application number: 19920745.7
(22) Date of filing: 22.03.2019
(51) Int. Cl.: G06F 13/00, G10L 15/00, G06F 3/16

(54) **CONTROL DEVICE, APPARATUS CONTROL SYSTEM, CONTROL METHOD, AND PROGRAM**
STEUERUNGSVORRICHTUNG, GERÄTESTEUERUNGSSYSTEM, STEUERUNGSVERFAHREN UND PROGRAMM
DISPOSITIF DE COMMANDE, SYSTÈME DE COMMANDE D'APPAREIL, PROCÉDÉ DE COMMANDE ET PROGRAMME

(43) Date of publication of application: 22.12.2021
(73) Proprietor: MITSUBISHI HEAVY INDUSTRIES THERMAL SYSTEMS, LTD., Minato-ku Tokyo 108-8215 (JP)
(72) Inventor: TAKANO Masashi, Tokyo 108-8215 (JP); IWASE Tetsuro, Tokyo 108-8215 (JP)
(74) Representative: Cabinet Beau de Loménie
(86) International application number: PCT/JP2019/011992
(87) International publication number: WO 2020/194367

(56) References cited:
- EP-A1- 3 411 634
- EP-B1- 3 411 634
- WO-A1-2018/040199
- WO-A1-2019/026314
- CN-A- 109 405 171
- JP-A- 2015 050 657
- JP-A- 2016 207 043
- JP-A- 2018 156 060
- JP-B2- 5 917 463
- KR-A- 20180 126 946
- KR-B1- 101 757 446
- US-A1- 2020 090 654

## Description

### Technical Field

The present invention relates to a control device, an apparatus control system, a control method, and a program.

### Background Art

AI apparatuses such as mobile terminals and smart speakers that understand and operate the language spoken by humans are becoming widespread in our daily lives. By using the AI apparatus, the user can operate a home electrical apparatus such as a television by voice without operating a remote controller or the like. For example, PTL 1 discloses a mobile terminal device that outputs a voice message asking whether or not to turn on the power of the air conditioner together with a voice such as "hot" or "cold", based on the temperature detected by a temperature sensor, and transmits a control command for turning on the air conditioner to the air conditioner when the sound of "turn on" is said by the user.

PTL 2 and PTL 3 are also known and disclose control methods for air conditioning systems. PTL 4 presents a method by which an electronic device provides information corresponding to a voice request uttered by a user. PTL 5 and PTL 6 describe electronic devices able to record a voice request uttered by a user and to forward it to a voice server.

### Citation List

### Patent Literature

[PTL 1] Japanese Unexamined Patent Application Publication No. 2007-135008.
[PTL 2] EP 3 411 634
[PTL 3] CN 109 405 171
[PTL 4] KR 2018 0126946
[PTL 5] JP 5 917 463
[PTL 6] WO 2018/040199

### Summary of Invention

### Technical Problem

The technique described in PTL 1 is a method in which a person operates a home electrical apparatus such as an air conditioner by using a dedicated mobile terminal device. PTL 1 does not disclose a technique for home electrical apparatuses to utilize AI apparatuses. For example, it is not disclosed that an air conditioner requests information necessary for air conditioning control such as room temperature from a mobile terminal device (AI apparatus) and obtains room temperature information from the mobile terminal device. Further, in order to enable such control, it is necessary to establish dedicated communication between the AI apparatus and the air conditioner, so it is necessary to request the AI apparatus manufacturer to develop the communication such that the communication can be performed.

The present invention provides a control device according to claim 1, a control method according to claim 3, and a program according to claim 4 capable of solving the above-described problems.

### Solution to Problem

A control device according to the present invention is defined in claims 1 and 2.

The present invention also relates to a control method as defined in claim 3.

The present invention also relates to a program as defined in claim 4.

### Advantageous Effects of Invention

According to the control device, the apparatus control system, the control method and the program described above, the control device of the home electrical apparatus can autonomously control the home electrical apparatus by utilizing the AI apparatus.

### Brief Description of Drawings

Fig. 1 is a block diagram illustrating an example of an apparatus control system according to an embodiment of the present invention.
Fig. 2 is a diagram illustrating an example of the operation of the apparatus control system according to the embodiment of the present invention.
Fig. 3 is a diagram illustrating an example of an air conditioning control system.
Fig. 4 is a first flowchart illustrating an example of the operation of the air conditioning control system.
Fig. 5 is a second flowchart illustrating an example of the operation of the air conditioning control system.
Fig. 6 is a third flowchart illustrating an example of the operation of the air conditioning control system.
Fig. 7 is a diagram illustrating an example of a hardware configuration of the apparatus control system. Description of Embodiments

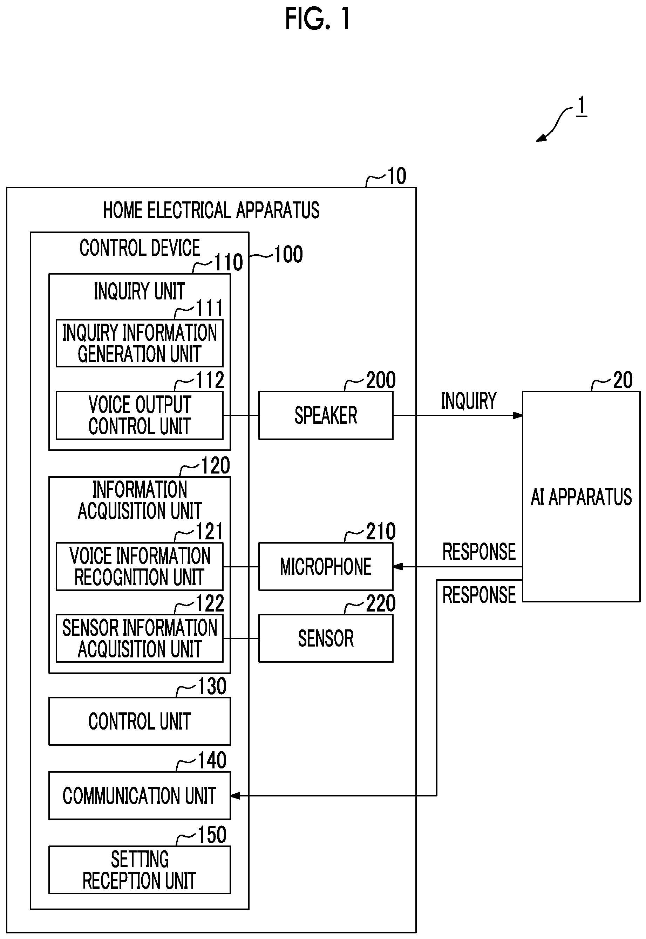

Hereinafter, an apparatus control system according to an embodiment of the present invention will be described with reference to Figs. 1 to 7.

Fig. 1 is a block diagram illustrating an example of the apparatus control system according to the embodiment of the present invention.

An apparatus control system 1 includes a home electrical apparatus 10 and an artificial intelligence (AI) apparatus 20. The apparatus control system 1 may also include a remote controller (not illustrated) for operating the home electrical apparatus 10. In the apparatus control system 1, the home electrical apparatus 10 is controlled by the home electrical apparatus 10 and the AI apparatus 20 communicating with each other using the natural language spoken by humans. Here, the home electrical apparatus 10 is, for example, an air conditioning apparatus such as an air conditioner, a humidifier, a dehumidifier, a stove, and an air purifier. Alternatively, the home electrical apparatus 10 may be a television, an audio device, a washing machine, a refrigerator, a rice cooker, or the like. Further, the AI apparatus 20 is, for example, a smart speaker, a mobile terminal device equipped with a voice assist system that enables voice recognition, language understanding, and dialogue. Further, the AI apparatus 20 is provided with a communication means, and has a function of connecting to the Internet and acquiring various types of information. In addition, the AI apparatus 20 is equipped with various sensors and can measure information such as temperature, humidity, and acceleration.

The home electrical apparatus 10 includes a control device 100, a speaker 200, a microphone 210, a sensor 220, and various units such as hardware, actuators, and electric/electronic circuits (not illustrated). The control device 100 includes an inquiry unit 110, an information acquisition unit 120, a control unit 130, a communication unit 140, and a setting reception unit 150.

The inquiry unit 110 requests the AI apparatus 20 for information necessary for controlling the home electrical apparatus 10. The inquiry unit 110 includes an inquiry information generation unit 111, and a voice output control unit 112.

The inquiry information generation unit 111 generates "inquiry information" for inquiring to the AI apparatus 20. The inquiry information includes content requesting information necessary for controlling the home electrical apparatus 10. Further, the inquiry information generation unit 111 generates various types of command information (for example, keywords necessary at the start of dialogue) based on the protocol necessary for communicating with the AI apparatus 20. Alternatively, the inquiry information generation unit 111 may generate inquiry information by preparing a plurality of pieces of inquiry information in advance for acquiring information expected to be necessary for control and selecting necessary information from the plurality of pieces of prepared information.

The voice output control unit 112 performs a control to output the inquiry information generated by the inquiry information generation unit 111 from the speaker 200. For example, the voice output control unit 112 sets the frequency of the voice output from the speaker 200 to a predetermined frequency band in the audible range or the non-audible range (for example, 20 kHz or more or less than 20 Hz). For example, the voice output control unit 112 sets the language output from the speaker 200 to a predetermined language (English, Japanese, or the like). For example, the voice output control unit 112 sets the utterance speed of the natural language output from the speaker 200 to a predetermined speed. The voice output control unit 112 outputs voice information based on these settings from the speaker 200.

It is assumed that the AI apparatus 20 is configured to be able to recognize voice information in the non-audible range and output the voice information in the non-audible range. For example, the inquiry information generated by the inquiry information generation unit 111 includes the identification information on the home electrical apparatus 10, or the like, and when the AI apparatus 20 recognizes the voice information including the identification information, the AI apparatus 20 may be configured to respond by outputting the voice information in the non-audible range. Alternatively, when voice information in a non-audible range such as ultrasonic waves is output from the home electrical apparatus 10, the AI apparatus 20 may be configured to respond by outputting voice information in the non-audible range, and when the home electrical apparatus 10 makes an inquiry by outputting voice information in the audible range, the AI apparatus 20 may be configured to respond by outputting voice information in the audible range.

The information acquisition unit 120 acquires information necessary for controlling the home electrical apparatus 10 from the AI apparatus 20 and the sensor 220. The information acquisition unit 120 includes a voice information recognition unit 121 and a sensor information acquisition unit 122.

The voice information recognition unit 121 has a voice recognition function and a language understanding function of a plurality of languages such as Japanese and English. The voice information recognition unit 121 acquires the voice information output by the AI apparatus 20 via the microphone 210, and recognizes the content thereof. The voice information recognition unit 121 extracts the answer information to the inquiry from the recognized contents, and outputs the answer information to the control unit 130.

The sensor information acquisition unit 122 acquires the sensor information measured by the sensor 220 included in the home electrical apparatus 10. The sensor information acquisition unit 122 outputs, to the control unit 130, the sensor information acquired from the sensor 220. The sensor 220 is a general term for sensors included in the home electrical apparatus 10, and may include a plurality of sensors. The type of sensor included in the sensor 220 varies depending on the type of the home electrical apparatus 10.

The control unit 130 operates the hardware unit, the actuator, the electronic circuit, and the like of the home electrical apparatus 10 based on the information acquired from the information acquisition unit 120, and performs control such that the functions of the home electrical apparatus 10 are exhibited. Further, when the control unit 130 determines that it is necessary to acquire the information necessary for control from the AI apparatus 20, the control unit 130 instructs the inquiry unit 110 to execute an inquiry to the AI apparatus 20.

The communication unit 140 communicates with the remote controller of the home electrical apparatus 10 and the AI apparatus 20 by infrared communication, Bluetooth (registered trademark), or the like. As will be described later, communication between the home electrical apparatus 10 and the AI apparatus 20 is performed by outputting voice information in natural language from the home electrical apparatus 10 to the AI apparatus 20. On the other hand, from the AI apparatus 20 to the home electrical apparatus 10, it is also possible to transmit a control signal including answer information to the inquiry, in addition to the output of the voice information in natural language.

The setting reception unit 150 receives settings of a language to be output by the inquiry unit 110 and a language to be understood, a setting for an utterance speed of voice information on the inquiry, and a setting for a frequency band of the voice information, and the like. The inquiry unit 110 and the voice information recognition unit 121 generate inquiry information, output and recognize voice information, based on the settings received by the setting reception unit 150.

For example, by setting the frequency band of voice information to a non-audible range (high frequency or low frequency), the home electrical apparatus 10 and the AI apparatus 20 can communicate without being perceived by the user. Further, by setting the utterance speed to be high, the communication time can be shortened. It should be noted that the user may communicate using voice information in the audible range, according to his/her needs. Further, since these items can be set, it is possible to set such that communication can be performed according to the specifications of the AI apparatus 20.

Next, the operation of the apparatus control system 1 will be described.

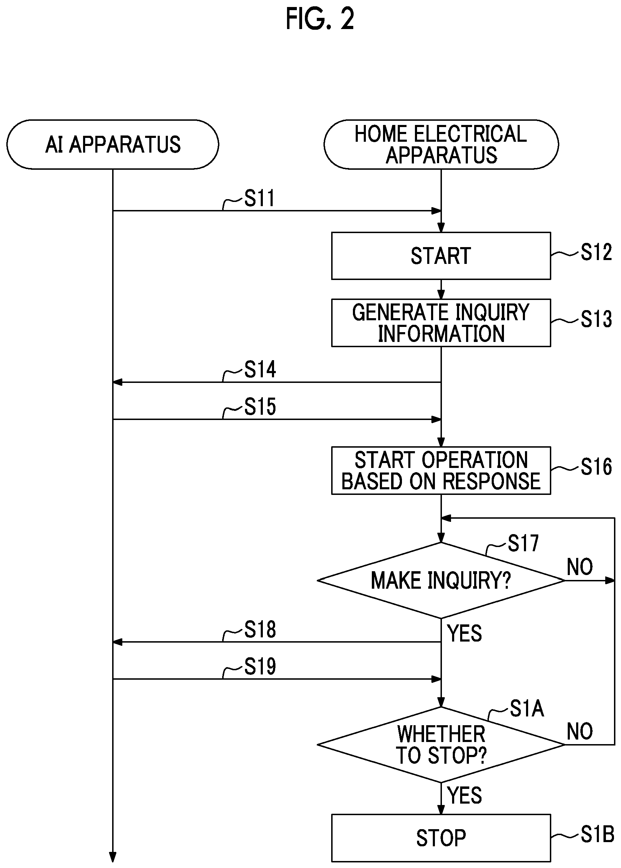

Fig. 2 is a diagram illustrating an example of the operation of the apparatus control system according to the embodiment of the present invention.

First, the user says a predetermined start keyword to the AI apparatus 20, and then says a voice instructing the start of the home electrical apparatus 10. Then, the AI apparatus 20 transmits a start instruction to the home electrical apparatus 10 (step S11). The AI apparatus 20 may instruct the home electrical apparatus 10 to start, by outputting predetermined voice information such as "Start the home electrical apparatus 10" in a predetermined language. Alternatively, the AI apparatus 20 may transmit a start instruction signal to the home electrical apparatus 10 via infrared communication or the like. When instructing the start by voice, the AI apparatus 20 may output voice information by ultrasonic waves in a non-audible region (for example, 20 kHz or more).

The home electrical apparatus 10 acquires the start instruction output by the AI apparatus 20. When the AI apparatus 20 outputs a start instruction by voice information, the microphone 210 acquires the voice information and outputs the voice information to the voice information recognition unit 121. The voice information recognition unit 121 recognizes the content of the voice information, extracts the start instruction information, and outputs the start instruction information to the control unit 130. On the other hand, when the AI apparatus 20 transmits a non-verbal start instruction signal, the communication unit 140 receives the start instruction signal. The communication unit 140 outputs a start instruction signal to the control unit 130. The control unit 130 starts the home electrical apparatus 10 (step S12).

Next, the control unit 130 requests the inquiry unit 110 for information (initial information) necessary for control. For example, when the home electrical apparatus 10 is an air conditioning apparatus, the control unit 130 requests the inquiry unit 110 for the room temperature and the weather information. In the inquiry unit 110, the inquiry information generation unit 111 first creates a sentence including keywords ("Alexa", "OK Google", or the like) necessary for starting the dialogue. Further, the inquiry information generation unit 111 generates, following the sentence, for example, a sentence requesting information necessary for control such as "Please tell me the room temperature and weather information" in the set language (step S13). Alternatively, a plurality of text files in which sentences requesting information necessary for control are stored and voice files for outputting sentences requesting necessary information are prepared in advance, and the inquiry information generation unit 111 may select the text file or voice file corresponding to the contents of the inquiry this time. For example, the inquiry information generation unit 111 selects a voice file that outputs "Please tell me the room temperature" and a voice file that outputs "Please tell me the weather" in the language for which the setting reception unit 150 receives the setting.

The inquiry information generation unit 111 outputs the created sentence to the voice output control unit 112. Alternatively, the inquiry information generation unit 111 outputs the selected voice file to the voice output control unit 112. The voice output control unit 112 outputs the voice information from the speaker 200, by reading out the sentence acquired from the inquiry information generation unit 111 and playing back the voice file. The voice output control unit 112 outputs voice information in the frequency band and utterance speed for which the setting reception unit 150 has received the setting, and makes an inquiry by using voice (step S14).

The AI apparatus 20 acquires the inquiry information by voice. The AI apparatus 20 accesses the Internet and acquires weather information and temperature information. Alternatively, the AI apparatus 20 acquires the temperature detected by the temperature sensor included in the AI apparatus 20. The AI apparatus 20 responds to an inquiry from the home electrical apparatus 10, by outputting voice information or transmitting a control signal (step S15).

The home electrical apparatus 10 acquires the information returned from the AI apparatus 20. When the AI apparatus 20 responds by using voice, the voice information recognition unit 121 acquires the voice information returned via the microphone 210 and recognizes the content of the response. The voice information recognition unit 121 outputs the recognized temperature and weather information to the control unit 130. On the other hand, when the AI apparatus 20 responds with a non-verbal control signal, the communication unit 140 receives the control signal. The communication unit 140 outputs a control signal to the control unit 130. The control unit 130 starts the operation of the home electrical apparatus 10 based on the returned information (step S16).

The control unit 130 determines whether or not to make an inquiry to the AI apparatus 20 while continuing the operation of the home electrical apparatus 10 (step S17). For example, the control unit 130 determines that inquiries with the same content are made at predetermined time intervals. Alternatively, the control unit 130 determines to make an inquiry, for example, when other type of information is required, based on the information detected by the sensor 220 or the response from the AI apparatus 20. When an inquiry is required (step S17; Yes), the control unit 130 designates the contents to be inquired to the inquiry unit 110 and instructs the AI apparatus 20 to make an inquiry.

The inquiry information generation unit 111 generates a sentence requesting the information designated by the control unit 130, and selects a voice file for acquiring the designated information. The voice output control unit 112 makes a voice inquiry by, for example, outputting voice information in a non-audible range from the speaker 200 by playing back a selected voice file (step S18).

The AI apparatus 20 acquires the inquiry information by voice. The AI apparatus 20 acquires the inquired information from the Internet or the like. Alternatively, the AI apparatus 20 may communicate with another device to acquire the inquired information. The AI apparatus 20 responds to an inquiry of the home electrical apparatus 10 by outputting voice information or transmitting a control signal (step S19).

The control unit 130 determines whether or not to stop the operation of the home electrical apparatus 10, and repeats the processes after step S17 when the operation is not to be stopped (step S1A; No).

On the other hand, when the stop instruction by voice information is output from the AI apparatus 20, the voice information recognition unit 121 acquires the voice information via the microphone 210 and recognizes the stop instruction. The voice information recognition unit 121 outputs stop instruction information to the control unit 130. The control unit 130 stops the operation of the home electrical apparatus 10. Further, when the non-verbal stop instruction signal is transmitted from the AI apparatus 20, the communication unit 140 receives the stop instruction signal and outputs it to the control unit 130. The control unit 130 stops the operation of the home electrical apparatus 10 (step S1B).

According to the present embodiment, the control device 100 can acquire information necessary for controlling the home electrical apparatus 10 by communicating with the AI apparatus 20. Thus, the control device 100 can autonomously control the home electrical apparatus 10 by utilizing the AI apparatus 20. Further, since the function of the AI apparatus 20 (smart speaker or the like) having the function of dialogue in natural language is used, it is possible to use the home electrical apparatus 10 as if it has an artificial intelligence, without requesting the smart speaker maker for development. Further, by outputting the voice information exchanged between the control device 100 and the AI apparatus 20 in a non-audible range, the voice information can be used in a scene where the voice is not desired to be heard, such as at night or in a place where many people gather.

Further, since it is considered that the AI apparatus 20 is likely to be disposed near the user, it is possible to sense information necessary for control at a position close to the user and feed it back for the control of the home electrical apparatus 10. For example, when the AI apparatus 20 is provided with a humidity sensor and the home electrical apparatus 10 is a humidifier or a dehumidifier, control based on the humidity at the position where the user is present can be performed. For example, when the AI apparatus 20 is provided with a temperature sensor and the home electrical apparatus 10 is an air conditioner, control based on the temperature at the position where the user is present can be performed. Further, when an audio device is applied to the home electrical apparatus 10, the audio device can analyze the sound received by the AI apparatus 20 and can perform control such that a better sound reaches the position (user's position) where the AI apparatus 20 is disposed.

Further, since the AI apparatus 20 can connect to the Internet and acquire various types of information, various types of information can be acquired via the AI apparatus 20 without mounting the function of acquiring the information from the Internet on the home electrical apparatus 10.

### (Application to air conditioners)

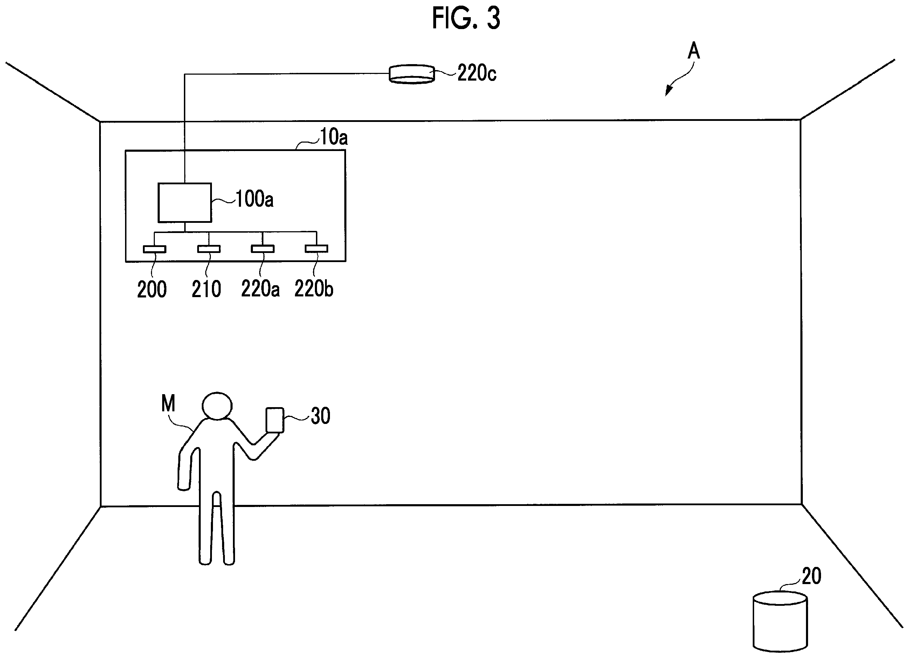

Next, the control when the apparatus control system 1 is applied to the control of the air conditioner will be described with reference to Figs. 3 to 6.

Fig. 3 is a diagram illustrating an example of an air conditioning control system.

As illustrated in Fig. 3, an air conditioner 10a is provided on the wall on the back side of the room A. The AI apparatus 20 is installed on the front side of the room A. The user M has a remote controller 30 of the air conditioner 10a. The air conditioner 10a includes a control device 100a. As illustrated in Fig. 1, the control device 100a includes functional units (the inquiry unit 110, the information acquisition unit 120, the control unit 130, the communication unit 140, and the setting reception unit 150) similar to the control device 100. Further, the control device 100a is connected to the speaker 200, the microphone 210, the temperature sensor 220a, the humidity sensor 220b, and the motion sensor 220c. The temperature sensor 220a and the humidity sensor 220b are provided, for example, near the suction port of the indoor unit of the air conditioner 10a. The motion sensor 220c is provided on the ceiling of the room A, for example.

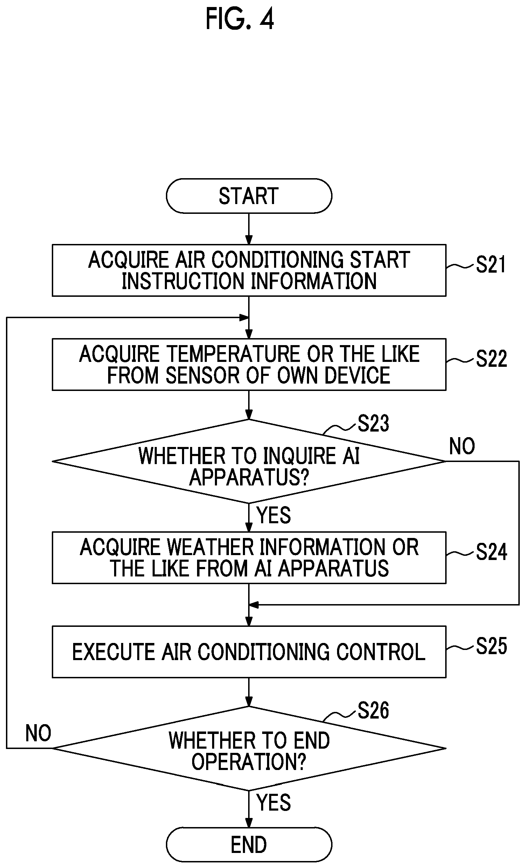

Fig. 4 is a first flowchart illustrating an example of the operation of the air conditioning control system.

First, the user M instructs the AI apparatus 20 to start the air conditioner 10a by operating the remote controller 30 or by giving a voice instruction to the AI apparatus 20. In the air conditioner 10a, the control device 100a acquires the air conditioning start instruction information (step S21). More specifically, the voice information recognition unit 121 of the control device 100a recognizes the voice information output by the AI apparatus 20 and extracts the start instruction information. Alternatively, the communication unit 140 receives the start instruction signal transmitted by the remote controller 30. The control unit 130 starts the air conditioner 10a based on the start instruction information.

Next, the control unit 130 acquires the room temperature from the sensor 220a, the humidity from the sensor 220b, the number of people present in the room A from the sensor 220c, and the like (step S22). In a general air conditioner, air conditioning is controlled based on these types of sensor information. For example, control is performed such that the room temperature measured by the sensor 220a becomes the set temperature. However, in the present embodiment, the air conditioning control is performed using not only the sensor information measured by the sensors 220a to 220c but also the information acquired from the AI apparatus 20.

Therefore, the control unit 130 determines whether or not to inquire the AI apparatus 20 for information necessary for control (step S23). (A) For example, the control unit 130 determines that the information from the AI apparatus 20 is necessary as the initial information at the time of start, and determines to make an inquiry to the AI apparatus 20. (B) For example, when the difference between the set temperature and the room temperature acquired from the AI apparatus 20 or the room temperature measured by the sensor 220a is larger than a predetermined threshold value, the control unit 130 may determine to make an inquiry to the AI apparatus 20 every predetermined first time, and when the difference between the two temperatures is equal to or less than the predetermined threshold value, the control unit 130 may determine to make an inquiry to the AI apparatus 20 every predetermined second time set longer than the first time. (C) For example, the control unit 130 may determine to make an inquiry to the AI apparatus 20 every predetermined third time until the predetermined time elapses from when there is a change in the number of people in the room A measured by the motion sensor 220c, and after the elapse of the predetermined time, the control unit 130 may determine to make an inquiry to the AI apparatus 20 every predetermined fourth time set longer than the third time.

When it is determined to make an inquiry to the AI apparatus 20 (step S23; Yes), the control unit 130 instructs the inquiry unit 110 to inquire the AI apparatus 20 for weather information or the like. Then, the inquiry information generation unit 111 generates a sentence including a keyword necessary for starting a dialogue with the AI apparatus 20 and a sentence requesting the room temperature and weather information necessary for air conditioning control in a predetermined language. The voice output control unit 112 outputs the generated sentence from the speaker 200 as, for example, voice information of ultrasonic waves of 20 kHz or more. Alternatively, the inquiry information generation unit 111 selects a voice file containing voice data requesting room temperature and weather information, and the voice output control unit 112 plays back and outputs the voice file from the speaker 200 as voice information of ultrasonic waves.

The AI apparatus 20 acquires inquiry information, accesses the Internet, and acquires, for example, hourly weather and temperature prediction information. Further, the AI apparatus 20 acquires the room temperature information measured by the temperature sensor included in the AI apparatus 20. The AI apparatus 20 notifies the air conditioner 10a of the requested information by outputting voice information or transmitting a control signal including weather information and the like.

The control device 100a acquires the weather information, the temperature (outside temperature), and the room temperature returned from the AI apparatus 20 (step S24). When the AI apparatus 20 outputs voice information, the voice information recognition unit 121 recognizes the voice information output by the AI apparatus 20, extracts each piece of information on weather, temperature, and room temperature, and outputs the information to the control unit 130. When the AI apparatus 20 transmits a non-verbal control signal, the communication unit 140 receives the control signal including each piece of information on the weather, the temperature, and the room temperature, and outputs the control signal to the control unit 130.

The control unit 130 executes air conditioning control (step S25).

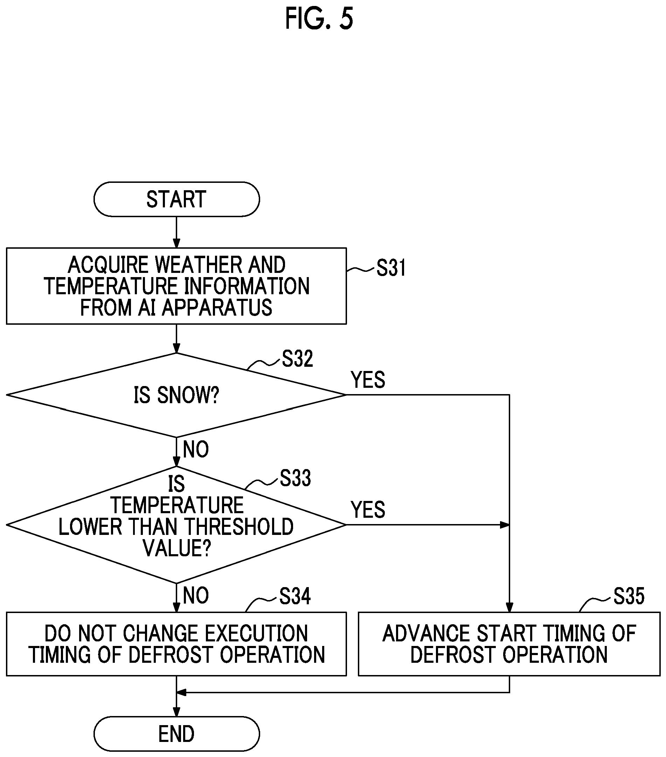

For example, when it is determined to make an inquiry to the AI apparatus 20 in step S23, the control unit 130 controls the air conditioner 10a by using the acquired weather, temperature, and room temperature information. For example, the control unit 130 performs a defrost operation by using the weather and temperature information. The control of the defrost operation will be described next with reference to Fig. 5. Further, the control unit 130 controls the room temperature of the room A, by using the room temperature acquired from the AI apparatus 20. The AI apparatus 20 is installed near the user M, and it is highly likely that the temperature sensor included in the AI apparatus 20 detects a room temperature closer to the temperature experienced by the user M than the sensor 200a provided in the air conditioner 10a. Therefore, the control unit 130 performs air conditioning control such that, for example, the room temperature acquired from the AI apparatus 20 becomes the set temperature. Alternatively, the control unit 130 may perform air conditioning control such that, for example, the weighted average of the room temperature acquired from the AI apparatus 20 and the room temperature measured by the sensor 200a becomes the set temperature. Further, for example, when the difference between the room temperature acquired from the AI apparatus 20 and the room temperature measured by the sensor 200a is equal to or greater than a predetermined threshold value, the control unit 130 may assume that the AI apparatus 20 is present at a position away from the air conditioner 10a, and perform control so as to change the wind direction and the air volume at a position farther than the present. Alternatively, the distance from the air conditioner 10a to the AI apparatus 20 may be estimated based on the voice information received from the AI apparatus 20 and the strength of the control signal, and the wind direction and the air volume may be controlled according to the estimated distance.

When it is not determined to make an inquiry to the AI apparatus 20 in step S23, the control unit 130 controls the air conditioner 10a based on the sensor information measured by the sensors 220a to 220c.

Next, the control device 100a determines whether or not to end the operation of the air conditioner 10a (step S26). When receiving the end instruction from the user, the control device 100a ends the operation of the air conditioner 10a. When the operation is continued (step S26; No), the process from step S22 is repeated. For example, the control device 100a acquires the sensor information measured by the sensors 220a to 220c at predetermined time intervals. Further, when a predetermined condition is satisfied (step S23), the control device 100a acquires the room temperature information from the AI apparatus 20. The control unit 130 continues the air conditioning control such that the temperature calculated based on the room temperature acquired from the AI apparatus 20 and the room temperature measured by the sensor 220a becomes the set temperature.

According to this embodiment, the room temperature (temperature measured at a place close to the user's position) for improving comfort can be acquired from the AI apparatus 20 and used for air conditioning control. Further, by simply installing the AI apparatus 20, the air conditioner 10a autonomously communicates with the AI apparatus 20, so that information that cannot be acquired by the air conditioner 10a can be acquired. This makes it possible to achieve more comfortable air conditioning control than before.

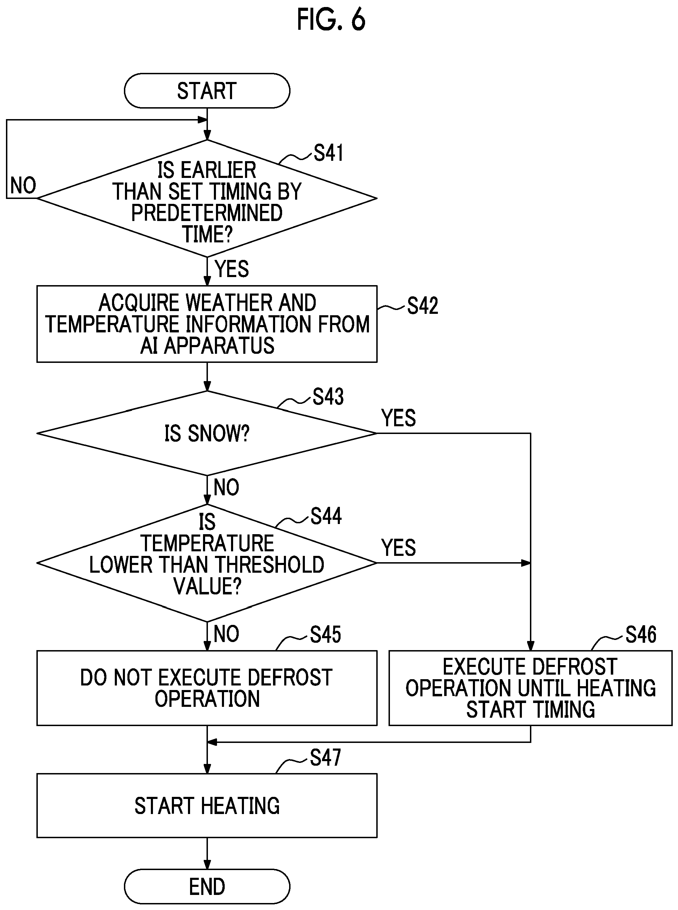

Next, the process of controlling the execution of the defrost operation by using the weather and temperature information acquired from the AI apparatus 20 will be described with reference to Figs. 5 and 6.

Fig. 5 is a second flowchart illustrating an example of the operation of the air conditioning control system.

Fig. 5 illustrates a processing example for controlling the start timing of the defrost operation during operation. As a premise, it is assumed that the air conditioner 10a is in the heating operation. Further, it is assumed that the defrost operation is set to be executed at predetermined time intervals.

The control device 100a acquires weather and temperature information from the AI apparatus 20 during the heating operation by the process described with reference to Fig. 4 (step S31).

The control unit 130 determines whether or not the acquired weather information includes snow (step S32). For example, when the hourly weather prediction information of the day is acquired at the beginning of the day, the control unit 130 determines whether or not the prediction at the current timing is snow. Alternatively, when the current weather information of the area is acquired at predetermined time intervals, the control unit 130 determines whether or not the latest weather information is snow. When the weather is snow (step S32; Yes), the control unit 130 determines to advance the defrost start timing. For example, when the defrost operation is set to be executed every 6 hours, the control unit 130 changes the setting such that the defrost operation is executed every 3 hours, for example.

When the weather is not snow (step S32; No), the control unit 130 determines whether or not the temperature acquired from the AI apparatus 20 is lower than a predetermined threshold value (step S33). For example, when the hourly temperature prediction information of the day is acquired at the beginning of the day, the control unit 130 determines whether the predicted temperature at the current timing is lower than the threshold value. Alternatively, when the current temperature of the area is acquired at predetermined time intervals, the control unit 130 determines whether the latest temperature is lower than the threshold value. When the temperature is lower than the threshold value (step S33; Yes), the control unit 130 determines to advance the start timing of the defrost operation. The degree to which the start timing of the defrost operation is advanced may be the same as or may be different from in the case of snow.

When the temperature is equal to or higher than the threshold value (step S33; No), the control unit 130 does not change the execution timing of the defrost operation.

Next, an example of defrost control during scheduled heating operation will be described.

Fig. 6 is a third flowchart illustrating an example of the operation of the air conditioning control system.

As a premise, it is assumed that room A is scheduled to reach a predetermined temperature at a timing T1. Normally, the control unit 130 is set to start the heating operation at a time earlier than the timing T1 by a time T2 (T2 is, for example, 1 hour).

The control unit 130 of the control device 100a determines whether or not to perform the defrost operation before the start of the heating operation, to prevent the room temperature of the room A from being unable to be controlled to reach the set temperature at the timing T1 due to a decrease in the efficiency of the heating operation, based on the schedule of the heating operation. The control unit 130 executes this determination at a time earlier than the timing T1 by a time T2+α (α is, for example, 10 minutes). Therefore, the control unit 130 first determines whether or not the current timing has reached a time earlier than the set timing T1 by a predetermined time (time T2+α) (step S41). When the time earlier by the predetermined time has been reached (step S41; Yes), the control unit 130 instructs the inquiry unit 110 to acquire the weather and temperature information from the present to the set timing T1. Based on this instruction, the inquiry unit 110 outputs inquiry information to the AI apparatus 20. The AI apparatus 20 responds to this inquiry. The control unit 130 acquires the weather and temperature information returned by the AI apparatus 20 via the voice information recognition unit 121 or the communication unit 140 (step S42).

The control unit 130 determines whether or not the acquired weather information includes snow (step S43). When the weather information from the present to the timing T1 includes snow (step S43; Yes), the control unit 130 determines that the defrost operation is executed before the start of the heating operation. The control unit 130 executes the defrost operation until the heating start timing (step S46). That is, the control unit 130 executes the defrost operation for the time α from the present to a time earlier than the set timing T1 by a time T2. Thus, the room A can be controlled to a desired temperature until the set timing T1, without lowering the efficiency of the heating operation to be started thereafter.

When the weather is not snow (step S43; No), the control unit 130 determines whether or not the temperature from the present to the timing T1 acquired from the AI apparatus 20 is lower than a predetermined threshold value (step S44). When the temperature in this time zone is lower than the threshold value (step S44; Yes), the control unit 130 starts the defrost operation and executes the defrost operation until the start timing of the heating operation (step S46).

When the temperature is equal to or higher than the threshold value (step S44; No), the control unit 130 does not execute the defrost operation (step S45). In this case, the control unit 130 waits until the heating start timing (a time earlier than the timing T1 by the time T2).

When the heating start timing is reached, the control unit 130 starts the heating operation (step S47).

According to the controls illustrated in Figs. 5 and 6, weather and temperature information can be acquired from the AI apparatus 20 and the defrost operation can be executed before snow or low temperature adversely affects the heating operation.

In the process of Fig. 6, α may be set longer, so that the start timing of the heating operation may be earlier in the case of snow or low temperature.

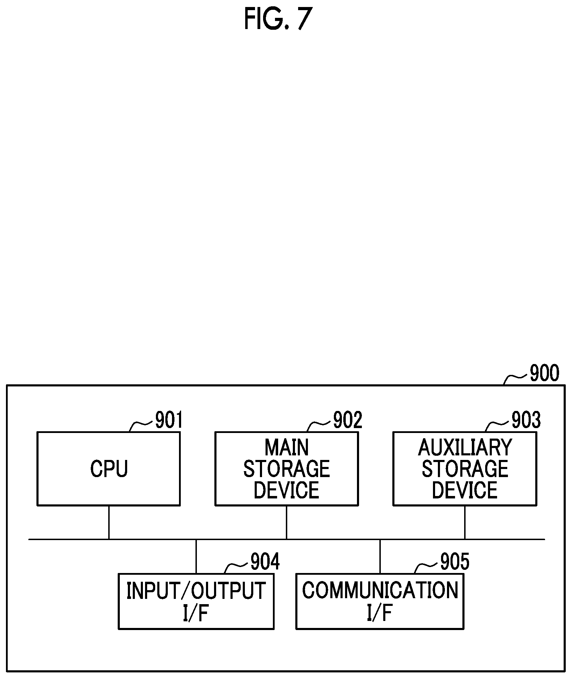

Fig. 7 is a diagram illustrating an example of a hardware configuration of the apparatus control system.

A computer 900 includes a CPU 901, a main storage device 902, an auxiliary storage device 903, an input/output interface 904, and a communication interface 905. The computer 900 may include a processor such as a micro processing unit (MPU) instead of the CPU 901.

The control devices 100 and 100a described above are mounted on the computer 900. Each of the above-described functions is stored in the auxiliary storage device 903 in the form of a program. The CPU 901 reads the program from the auxiliary storage device 903, develops the program into the main storage device 902, and executes the above process according to the program. Further, the CPU 901 secures a storage area in the main storage device 902 according to the program. The CPU 901 secures a storage area for storing the data being processed in the auxiliary storage device 903 according to the program.

A program for achieving all or a part of the functions of the control devices 100 and 100a is recorded on a computer-readable recording medium, and the process by each functional unit may be performed by a computer system reading and executing the program recorded on the recording medium. The term "computer system" as used herein includes hardware such as an OS and peripheral devices. Further, the "computer system" includes a homepage providing environment (or a display environment) when a WWW system is used. Further, the "computer-readable recording medium" refers to a portable medium such as a CD, DVD, or USB, or a storage device such as a hard disk built in a computer system. Further, when this program is delivered to the computer 900 through a communication line, the computer 900 receiving the delivered program may develop the program in the main storage device 902 and execute the above process. Further, the above-described program may achieve a part of the above-described functions, or may further achieve the above-described functions in combination with the program already recorded in the computer system.

In addition, it is possible to appropriately replace the components in the above-described embodiments with known components without departing from the scope of the present invention as defined in the claims. It should be noted that the technical scope of the present invention is not limited to the above-described embodiments, and various modifications can be made without departing from the scope of the present invention as defined in the claims.

### Industrial Applicability

According to the control device, the apparatus control system, the control method and the program described above, the control device of the home electrical apparatus can autonomously control the home electrical apparatus by utilizing the AI apparatus.

### Reference Signs List

1 Apparatus control system
10 Home electrical apparatus
10a Air conditioner
100, 100a Control device
110 Inquiry unit
111 Inquiry information generation unit
112 Voice output control unit
120 Information acquisition unit
121 Voice information recognition unit
122 Sensor information acquisition unit
130 Control unit
140 Communication unit
150 Setting reception unit
200 Speaker
210 Microphone
220, 220a, 220b, 220c Sensor
20 AI apparatus
30 Remote controller
900 Computer
901 CPU
902 Main storage device
903 Auxiliary storage device
904 Input/output interface
905 Communication interface

## Claims

1. A control device for a home electrical apparatus (10), comprising:
a speaker (200)
an inquiry unit (110) configured to generate inquiry information, configured to make an inquiry to the AI apparatus by using voice information in a non-audible range, including content requesting information necessary for controlling the home electrical apparatus and to output corresponding voice information including a predetermined keyword for starting a dialogue with an AI apparatus (20), prior to the inquiry ;
an acquisition unit (120) configured to acquire, from the AI apparatus (20), response information about the inquiry necessary for controlling the home electrical apparatus;
a voice information recognition unit (121) included in the acquisition unit and configured to recognize voice information output by the AI apparatus (20) as the response information in response to the inquiry, and to extract answer information included in the response information;
a communication unit (130) configured to receive a non-verbal response signal output by the AI apparatus (20) in response to the inquiry and which is alternative to the voice information output by the AI apparatus; and
a control unit (130) configured to start the operation of the home electrical apparatus (10), based on the response signal or the answer information and, while continuing the operation of the home electrical apparatus, configured to determine necessity of acquiring further information necessary for the control of the home electrical apparatus (10), and to instruct the inquiry unit (110) to execute the inquiry to the AI apparatus (20) if the acquiring information is determined to be necessary;
a setting reception unit (150) configured to receive settings for an utterance speed of the voice information output by the inquiry unit (110);
wherein, prior to the inquiry, in response to a start instruction for the home electrical apparatus (10) from the AI apparatus (20), the control unit (130) starts the home electrical apparatus; and
wherein the inquiry to the AI apparatus is made by outputting voice information from the speaker (200) using a natural language spoken by humans.

2. The control device according to claim 1, wherein
the inquiry unit (110) is configured to make the inquiry by using ultrasonic waves of 20 kHz or higher.

3. A control method comprising:
by a control device (100) for a home electrical apparatus (10), wherein the control device comprising a speaker (200),
a step of outputting voice information including a predetermined keyword for starting a dialogue with an AI apparatus (20), and subsequently, making an inquiry to the AI apparatus (20) by using voice information in a non-audible range including content requesting information necessary for controlling the home electrical apparatus;
a step of receiving settings for an utterance speed of the voice information output in the step of outputting;
a step of receiving a non-verbal response signal output by the AI apparatus (20) in response to the inquiry and which is alternative to the voice information output by the AI apparatus;
a step of acquiring, from the AI apparatus (20), response information about the inquiry necessary for controlling the home electrical apparatus;
a step of recognizing voice information output by the AI apparatus (20) as the response information in response to the inquiry, and extracting answer information included in the response information;
a step of starting operation of the home electrical apparatus (10), prior to the inquiry, in response to a start instruction for the home electrical apparatus (10) from the AI apparatus (20), and
a step of controlling the home electrical apparatus (10), based on the response signal;
a step of determining necessity of acquiring information necessary for control of the home electrical apparatus, and executing the inquiry to the AI apparatus (20) if the acquiring information is determined to be necessary;
wherein the inquiry to the AI apparatus (20) is made by outputting voice information from the speaker (200) using a natural language spoken by humans.

4. A computer program comprising instructions which, when the program is executed by a computer included in a home electrical apparatus (100), cause the computer to carry out the steps of the method of claim 3.

## Patentansprüche

1. Steuervorrichtung für ein elektrisches Haushaltsgerät (10), umfassend:
einen Lautsprecher (200),
eine Abfrageeinheit (110), die konfiguriert ist, um Abfrageinformationen zu erzeugen, die konfiguriert sind, um unter Verwendung von Sprachinformationen in einem nicht hörbaren Bereich, die Inhalte beinhalten, die Informationen anfordern, die zum Steuern der elektrischen Haushaltsvorrichtung erforderlich sind, eine Abfrage an die KI-Vorrichtung zu richten, und um entsprechende Sprachinformationen auszugeben, die ein vorbestimmtes Schlüsselwort beinhalten, um vor der Abfrage einen Dialog mit einer KI-Vorrichtung (20) zu starten;
eine Erfassungseinheit (120), die konfiguriert ist, um von der KI-Vorrichtung (20) Antwortinformationen über die Abfrage zu erfassen, die zum Steuern des elektrischen Haushaltsgeräts erforderlich sind;
eine Sprachinformation-Erkennungseinheit (121), die in der Erfassungseinheit beinhaltet ist und konfiguriert ist, um Sprachinformationen zu erkennen, die von der KI-Vorrichtung (20) als die Antwortinformationen als Reaktion auf die Abfrage ausgegeben werden, und um sie Antwortinformationen zu extrahieren, die in den Antwortinformationen beinhaltet sind;
eine Kommunikationseinheit (130), die konfiguriert ist, um ein nichtverbales Antwortsignal zu empfangen, das von der KI-Vorrichtung (20) als Reaktion auf die Abfrage ausgegeben wird und das alternativ zu den von der KI-Vorrichtung ausgegebenen Sprachinformationen ist; und
eine Steuereinheit (130), die konfiguriert ist, um den Betrieb des elektrischen Haushaltsgeräts (10) basierend auf dem Antwortsignal oder den Antwortinformationen zu starten, während der Betrieb des elektrischen Haushaltsgeräts fortgesetzt wird, konfiguriert ist, um die Notwendigkeit eines Erfassens weiterer Informationen zu bestimmen, die zum Steuern des elektrischen Haushaltsgeräts (10) erforderlich sind, und um die Abfrageeinheit (110) anzuweisen, die Abfrage an die KI-Vorrichtung (20) auszuführen, wenn die Erfassung von Informationen als erforderlich bestimmt wird;
eine Einstellungsempfangseinheit (150), die konfiguriert ist, um Einstellungen für eine Äußerungsgeschwindigkeit der von der Abfrageeinheit (110) ausgegebenen Sprachinformationen zu empfangen;
wobei die Steuereinheit (130) vor der Abfrage als Reaktion auf einen Startbefehl für das elektrische Haushaltsgerät (10) von der KI-Vorrichtung (20) das elektrische Haushaltsgerät startet; und
wobei die Abfrage an die KI-Vorrichtung durch Ausgeben von Sprachinformationen aus dem Lautsprecher (200) unter Verwendung einer von Menschen gesprochenen natürlichen Sprache erfolgt.

2. Steuervorrichtung nach Anspruch 1, wobei
die Abfrageeinheit (110) konfiguriert ist, um die Abfrage unter Verwendung von Ultraschallwellen von 20 kHz oder höher durchzuführen.

3. Steuerungsverfahren, umfassend:
durch eine Steuervorrichtung (100) für ein elektrisches Haushaltsgerät (10), wobei die Steuervorrichtung einen Lautsprecher (200) umfasst,
einen Schritt eines Ausgebens von Sprachinformationen, die ein vorbestimmtes Schlüsselwort zum Starten eines Dialogs mit einer KI-Vorrichtung (20) beinhalten, und anschließend eines Durchführens einer Abfrage an die KI-Vorrichtung (20) unter Verwendung von Sprachinformationen in einem nicht hörbaren Bereich, die einen Inhalt beinhalten, der Informationen anfordert, die zum Steuern der elektrischen Haushaltsvorrichtung erforderlich sind;
einen Schritt eines Empfangens von Einstellungen für eine Äußerungsgeschwindigkeit der in dem Ausgabeschritt ausgegebenen Sprachinformationen;
einen Schritt eines Empfangens eines nicht-verbalen Antwortsignals, das von der KI-Vorrichtung (20) als Reaktion auf die Abfrage ausgegeben wird und das alternativ zu den von der KI-Vorrichtung ausgegebenen Sprachinformationen ist;
einen Schritt eines Erfassens, von der KI-Vorrichtung (20), von Antwortinformationen über die Abfrage zu erfassen, die zum Steuern des elektrischen Haushaltsgeräts erforderlich sind;
einen Schritt eines Erkennens von Sprachinformationen, die von der KI-Vorrichtung (20) als die Antwortinformationen als Reaktion auf die Abfrage ausgegeben werden, und eines Extrahierens von Antwortinformationen, die in den Antwortinformationen beinhaltet sind;
einen Schritt eines Startens des Betriebs des elektrischen Haushaltsgeräts (10) vor der Abfrage als Reaktion auf eine Startanweisung für das elektrische Haushaltsgerät (10) von der KI-Vorrichtung (20), und
einen Schritt eines Steuerns des elektrischen Haushaltsgeräts (10) basierend auf dem Antwortsignal;
einen Schritt eines Bestimmens einer Notwendigkeit eines Erfassens von Informationen, die zum Steuern des elektrischen Haushaltsgeräts notwendig sind, und eines Ausführens der Abfrage an die KI-Vorrichtung (20), wenn das Erfassen von Informationen als notwendig bestimmt wird;
wobei die Abfrage an die KI-Vorrichtung (20) durch Ausgeben von Sprachinformationen aus dem Lautsprecher (200) unter Verwendung einer von Menschen gesprochenen natürlichen Sprache erfolgt.

4. Computerprogramm, umfassend Anweisungen, die, wenn das Programm von einem Computer ausgeführt wird, der in einem elektrischen Haushaltsgerät (100) beinhaltet ist, den Computer veranlassen, die Schritte des Verfahrens nach Anspruch 3 auszuführen.

## Revendications

1. Dispositif de commande pour un appareil électrique domestique (10), comprenant :
un haut-parleur (200) ;
une unité d'interrogation (110) configurée pour générer des informations d'interrogation, et configurée pour interroger un appareil d'IA en utilisant des informations vocales dans une plage non audible, incluant du contenu demandant des informations nécessaires pour commander l'appareil électrique domestique, et pour fournir en sortie des informations vocales correspondantes incluant un mot-clé prédéterminé pour démarrer un dialogue avec l'appareil d'IA (20) avant l'interrogation ;
une unité d'acquisition (120) configurée pour acquérir, à partir de l'appareil d'IA (20), des informations de réponse concernant l'interrogation, nécessaires pour commander l'appareil électrique domestique ;
une unité de reconnaissance d'informations vocales (121) incluse dans l'unité d'acquisition et configurée pour reconnaître les informations vocales fournies en sortie par l'appareil d'IA (20) en tant que les informations de réponse en réponse à l'interrogation, et pour extraire des informations de réponse formelle incluses dans les informations de réponse ;
une unité de communication (130) configurée pour recevoir un signal de réponse non verbale fourni en sortie par l'appareil d'IA (20) en réponse à l'interrogation, et qui est une alternative aux informations vocales fournies en sortie par l'appareil d'IA ; et
une unité de commande (130) configurée pour démarrer le fonctionnement de l'appareil électrique domestique (10), sur la base du signal de réponse ou des informations de réponse formelle et, tout en poursuivant le fonctionnement de l'appareil électrique domestique, configurée pour déterminer la nécessité d'acquérir d'autres informations nécessaires à la commande de l'appareil électrique domestique (10), et pour ordonner à l'unité d'interrogation (110) d'exécuter l'interrogation à l'appareil d'IA (20) si l'acquisition des informations est déterminée comme étant nécessaire ;
une unité de réception des réglages (150) configurée pour recevoir des réglages pour une vitesse d'énonciation des informations vocales fournies en sortie par l'unité d'interrogation (110) ;
dans lequel, avant l'interrogation, en réponse à une instruction de démarrage pour l'appareil électrique domestique (10) provenant de l'appareil d'IA (20), l'unité de commande (130) démarre l'appareil électrique domestique ; et
dans lequel l'interrogation à l'appareil d'IA est effectuée en fournissant en sortie des informations vocales à partir du haut-parleur (200) en utilisant un langage naturel parlé par des humains.

2. Dispositif de commande selon la revendication 1, dans lequel
l'unité d'interrogation (110) est configurée pour effectuer l'interrogation en utilisant des ondes ultrasonores de 20 kHz ou plus.

3. Procédé de commande, comprenant :
par un dispositif de commande (100) pour un appareil électrique domestique (10), dans lequel le dispositif de commande comprenant un haut-parleur (200),
une étape de fourniture en sortie d'informations vocales comprenant un mot-clé prédéterminé pour démarrer un dialogue avec un appareil d'IA (20), et subséquemment, interroger l'appareil d'IA (20) en utilisant des informations vocales dans une plage non audible incluant du contenu demandant des informations nécessaires pour commander l'appareil électrique domestique ;
une étape de réception de réglages pour une vitesse d'énonciation des informations vocales fournies en sortie à l'étape de fourniture en sortie ;
une étape de réception d'un signal de réponse non verbale fourni en sortie par l'appareil d'IA (20) en réponse à l'interrogation, et qui est une alternative aux informations vocales fournies en sortie par l'appareil d'IA ;
une étape d'acquisition, à partir de l'appareil d'IA (20), d'informations de réponse concernant l'interrogation, nécessaires pour commander l'appareil électrique domestique ;
une étape de reconnaissance d'informations vocales fournies en sortie par l'appareil d'IA (20) en tant que les informations de réponse en réponse à l'interrogation, et d'extraction d'informations de réponse formelle incluses dans les informations de réponse ;
une étape de démarrage du fonctionnement de l'appareil électrique domestique (10), avant l'interrogation, en réponse à une instruction de démarrage pour l'appareil électrique domestique (10) provenant de l'appareil d'IA (20), et
une étape de commande de l'appareil électrique domestique (10), sur la base du signal de réponse ;
une étape de détermination de la nécessité d'acquérir des informations nécessaires à la commande de l'appareil électrique domestique, et d'exécution de l'interrogation à l'appareil d'IA (20) si l'acquisition des informations est déterminée comme étant nécessaire ;
dans laquelle l'interrogation à l'appareil d'IA (20) est effectuée en fournissant en sortie des informations vocales à partir du haut-parleur (200) en utilisant un langage naturel parlé par des humains.

4. Programme informatique comprenant des instructions qui, lorsque le programme est exécuté par un ordinateur inclus dans un appareil électrique domestique (100), amènent l'ordinateur à mettre en œuvre les étapes du procédé selon la revendication 3.
